# EUROPEAN PATENT SPECIFICATION

(11) **EP 3 016 437 B1**
(45) Date of publication and mention of the grant of the patent: **02.01.2019**
(21) Application number: 13891154.0
(22) Date of filing: 07.08.2013
(51) Int. Cl.: H04W 36/28, H04W 36/00, H04W 36/16

(54) **HANDOVER IN DUAL CONNECTION MODE**
HANDOVER IM DOPPELVERBINDUNGS-MODUS
TRANSFERT EN MODE DOUBLE-CONNEXION

(43) Date of publication of application: 04.05.2016
(73) Proprietor: Huawei Technologies Co., Ltd., Longgang District Shenzhen, Guangdong 518129 (CN)
(72) Inventor: CHEN, Xiao, Shenzhen Guangdong 518129 (CN); DENG, Tianle, Shenzhen Guangdong 518129 (CN)
(74) Representative: Gill Jennings & Every LLP
(86) International application number: PCT/CN2013/080997
(87) International publication number: WO 2015/018006

(56) References cited:
- EP-A1- 2 618 609
- EP-A1- 2 978 261
- WO-A1-2011/159215
- WO-A1-2012/151746
- WO-A1-2012/159529
- CN-A- 102 665 142
- CN-A- 103 109 565
- US-A1- 2008 025 263
- US-A1- 2008 064 401
- HUAWEI: "MeNB Mobility Procedure", 3GPP DRAFT; R3-140117 MENB MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech Republic; 20140210 - 20140214 9 February 2014 (2014-02-09), XP050738558, Retrieved from the Internet: URL:http://www.3gpp.org/ftp/Meetings_3GPP_ SYNC/RAN/RAN3/Docs/ [retrieved on 2014-02-09]
- PANTECH: "Discussion about inter-MeNB HO operation scenario on dual connectivity", 3GPP DRAFT; R2-134338 DISCUSSION ABOUT INTER-MENB HO OPERATION SCENARIO ON DUAL CONNECTIVITY, 3RD GENERATION PARTNERSHIP PROJECT (3GPP), MOBILE COMPETENCE CENTRE ; 650, ROUTE DES LUCIOLES ; F-06921 SO , vol. RAN WG2, no. San Francisco, USA; 20131111 - 20131115 1 November 2013 (2013-11-01), XP050753181, Retrieved from the Internet: URL:http://www.3gpp.org/ftp/tsg_ran/WG2_RL 2/TSGR2_84/Docs/ [retrieved on 2013-11-01]

## Description

### TECHNICAL FIELD

The present invention relates to the field of communications technologies, and in particular, to a communication method in dual connection mode, an apparatus, and a system.

### BACKGROUND

In a heterogeneous network, at least one WLAN (wireless local area network) is deployed at a service hotspot or a coverage hole area of signal coverage of a 3GPP (Third Generation Partnership Project) access device, to meet a service capacity requirement of a UE (user equipment) served by the 3GPP access device, so that services of the UE served by the 3GPP access device are offloaded and load of the 3GPP access device is reduced. In such an architecture, the UE may be connected to both the 3GPP access device and a WLAN AP (access point) to transmit service data. The 3GPP access device may control transmission of service data, carried by the WLAN, of the UE, so that same QoS (quality of service) is guaranteed for services, carried by the WLAN and by the 3GPP access device, of the UE.

As the UE moves, due to factors such as signal quality, the UE may be handed over from a first 3GPP access device to a second 3GPP access device. However, the second 3GPP access device cannot control transmission of a service, carried by the WLAN, of the UE, and cannot ensure the QoS of the service.

EP 2618609 A1 discloses a method for switching of multi-carrier, comprising: receiving a message sent from a source RAN node corresponding to a first link and comprising information of a second link; according to the information of the second link, establishing a connection between a target RAN node corresponding to the first link and a RAN node corresponding to the second link, wherein the first link is a link in a first RAT network, and the second link is a link in a second RAT network.

### SUMMARY

In view of the foregoing technical problems, embodiments of the present invention provide a communication method in dual connection mode, a base station, and user equipment.

According to a first aspect of the present invention, there is provided a communication method in dual connection mode, comprising: determining, by a first Third Generation Partnership Project, 3GPP, access device, whether a 3GPP handover needs to be performed for user equipment, UE, wherein the 3GPP handover is a handover from the first 3GPP access device to a second 3GPP access device; sending, by the first 3GPP access device, connection information between the UE and a third access device to the second 3GPP access device when the first 3GPP access device determines that the 3GPP handover needs to be performed for the UE, wherein the connection information is configured for being used to control service transmission of the UE in the third access device by the second 3GPP access device, wherein the first 3GPP access device and the third access device are devices that the UE is currently connected to, characterized in that: the third access device is a device in a wireless local area network, WLAN, and the connection information comprises security configuration-related information of the third access device.Based on the first aspect, in a first possible implementation manner of the first aspect, the connection information further includes at least one of the following:
identification ID information, load information, and radio channel information of the third access device, and information about a service that is currently carried on a connection to the third access device.

Based on the first aspect or the first possible implementation manner, in a second possible implementation manner of the first aspect, the method further comprises: when the first 3GPP access device determines that the 3GPP handover needs to be performed for the UE, the first 3GPP access device disconnects the connection to the UE and instruct the UE to be connected to the second 3GPP access device, wherein the connection between the UE and the third access device remains unchanged.

According to a second aspect of the present invention, there is provided a communication method in dual connection mode, comprising: receiving, by a second Third Generation Partnership Project, 3GPP, access device when a first 3GPP access device determines that user equipment, UE, needs to be handed over from the first 3GPP access device to the second 3GPP access device, connection information between the UE and a third access device sent by the first 3GPP access device, wherein the first 3GPP access device and the third access device are devices that the UE is currently connected to; and controlling, by the second 3GPP access device, the service transmission of the UE in the third access device according to the connection information between the UE and the third access device after the UE is handed over to the second 3GPP access device and a connection between the UE and the second 3GPP access device is established, characterized in that: the third access device is a device in a wireless local area network, WLAN, and the connection information comprises security configuration-related information of the third access device.

Based on the second aspect, in a first possible implementation manner of the second aspect, the connection information further includes at least one of the following:
identification ID information, load information, and radio channel information of the third access device, and information about a service that is currently carried on a connection to the third access device.

According to a third aspect of the present invention, there is provided a first 3GPP access device, comprising: a handover determining unit, configured to determine whether a Third Generation Partnership Project, 3GPP, handover needs to be performed for user equipment, UE, wherein the 3GPP handover is a handover from the first 3GPP access device to a second 3GPP access device; and a sending unit, configured to send connection information between the UE and a third access device to the second 3GPP access device when the handover determining unit determines that the 3GPP handover needs to be performed for the UE, wherein the connection information is configured for being used to control service transmission of the UE in the third access device by the second 3GPP access device, wherein the first 3GPP access device and the third access device are devices that the UE is currently connected to, characterized in that: the third access device is a device in a wireless local area network, WLAN, and the connection information comprises security configuration-related information of the third access device.

Based on the third aspect, in a first possible implementation manner of the third aspect, the connection information further includes at least one of the following: identification ID information, load information, and radio channel information of the third access device, and information about a service that is currently carried on a connection to the third access device.

Based on the third aspect or the first possible implementation manner of the third aspect, in a second possible implementation manner of the third aspect, wherein the handover determining unit is further configured to: when the first 3GPP access device determines that the 3GPP handover needs to be performed for the UE, disconnect the connection to the UE and instruct the UE to be connected to the second 3GPP access device, wherein the connection between the UE and the third access device remains unchanged.

According to a fourth aspect of the present invention, there is provided a second 3GPP access device, comprising: a receiving unit, configured to: when a first, Third Generation Partnership Project, 3GPP, access device determines that user equipment, UE, needs to be handed over from the first 3GPP access device to the second 3GPP access device, receive connection information between the UE and a third access device sent by the first 3GPP access device, wherein the first 3GPP access device and the third access device are devices that the UE is currently connected to; and a service control unit, configured to: after the UE is handed over to the second 3GPP access device and a connection between the UE and the second 3GPP access device is established, control the service transmission of the UE in the third access device according to the connection information between the UE and the third access device received by the receiving unit, characterized in that: the third access device is a device in a wireless local area network, WLAN, and the connection information comprises security configuration-related information of the third access device.

Based on the fourth aspect, in a first possible implementation manner of the fourth aspect, the connection information further includes at least one of the following:
identification ID information, load information, and radio channel information of the third access device, and information about a service that is currently carried on a connection to the third access device.

According to a fifth aspect of the present invention, a communication system is provided, comprising a first 3GPP access device according to the third aspect of the present invention; and a second 3GPP access device according to the fourth aspect of the present invention.

When the technical solutions provided by the embodiments of the present invention are applied, during a handover of UE from a first 3GPP access device to a second 3GPP access device, the first 3GPP access device notifies the second 3GPP access device of connection information that is used by the second 3GPP access device to control transmission of a service, carried by a third access device, of the UE, so that after the 3GPP handover is performed for the UE, transmission of service data, carried by the third access device, of the UE can continue to be controlled by a 3GPP access device without an interruption, thereby guaranteeing QoS of the service and improving user experience of the UE.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A is a schematic system architecture diagram of a heterogeneous network according to an embodiment of the present invention;
FIG. 1B is a schematic flowchart of a communication method in dual connection mode according to an embodiment of the present invention;
FIG. 2 is a schematic flowchart of another communication method in dual connection mode according to an embodiment of the present invention;
FIG. 3 is a schematic flowchart of a communication method in dual connection mode according to an aspect of the embodiments of the present invention;
FIG. 4 is a schematic flowchart of a communication method in dual connection mode according to an aspect of the embodiments of the present invention;
FIG. 5 is a schematic flowchart of a communication method in dual connection mode according to an aspect of the embodiments of the present invention;
FIG. 6 is a schematic flowchart of a communication method in dual connection mode according to an aspect of the embodiments of the present invention;
FIG. 7 is a schematic structural diagram of a first 3GPP access device 70 according to an aspect of the embodiments of the present invention;
FIG. 8 is a schematic structural diagram of a second 3GPP access device 80 according to an aspect of the embodiments of the present invention;
FIG. 9 is a schematic structural diagram of a first 3GPP access device 90 according to an aspect of the embodiments of the present invention;
FIG. 10 is a schematic structural diagram of a second 3GPP access device 100 according to an aspect of the embodiments of the present invention; and
FIG. 11 is a schematic structural diagram of a system according to an aspect of the embodiments of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the embodiments of the present invention may be applied to communications systems supporting various standards, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunication System, "UMTS" for short) or the like.

In the embodiments of the present invention, a 3GPP access device (for example, a first 3GPP access device and a second 3GPP access device in the embodiments of the present invention) may be a base transceiver station (Base Transceiver Station, BTS) in GSM or CDMA, or a NodeB (NodeB) in WCDMA, or an eNB (evolved NodeB) in LTE, which is not limited in the present invention.

User equipment (User Equipment, UE), also referred to as a mobile terminal (Mobile Terminal, MT), mobile user equipment, and the like, may communicate with one or more core networks through a radio access network (Radio Access Network, RAN). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus.

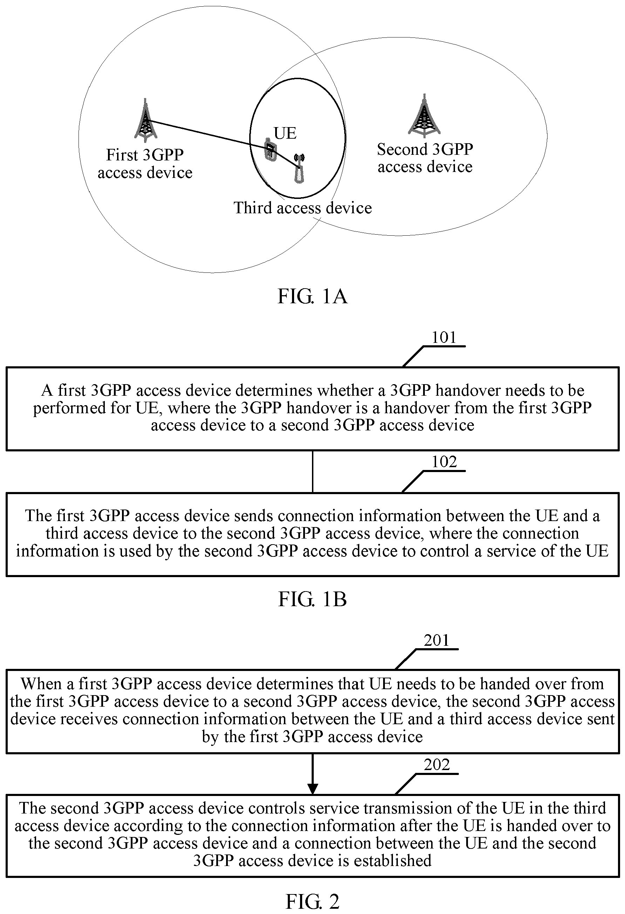

FIG. 1A is a schematic system architecture diagram of a heterogeneous network according to an embodiment of the present invention. In the system architecture, at least one third access device is deployed in an overlapping area between signal coverage of a first 3GPP access device and signal coverage of a second 3GPP access device. The signal coverage of the first 3GPP access device and the signal coverage of the second 3GPP access device are larger than signal coverage of the third access device. The first 3GPP access device and the third access device are devices that UE is currently connected to, that is, the UE is in a state of being connected to both the first 3GPP access device and the third access device. The first 3GPP access device is configured to control transmission of service data of the UE in the third access device. As the UE moves, due to factors such as signal quality (for example, the signal quality is less than a preset threshold), the first 3GPP access device may fail to satisfy a condition for connecting the UE to the first 3GPP access device. When the UE satisfies a condition for being connected to the second 3GPP access device, the UE may be handed over from the first 3GPP access device to the second 3GPP access device; however, in an existing 3GPP handover process, when the UE is handed over to the second 3GPP device, the second 3GPP access device cannot take over the control on the transmission of the service data, carried by the third access device, of the UE.

FIG. 1B is a schematic flowchart of a communication method in dual connection mode according to an aspect of the embodiments of the present invention. The method includes the following content.

101: A first 3GPP access device determines whether a 3GPP handover needs to be performed for UE, where the 3GPP handover is a handover from the first 3GPP access device to a second 3GPP access device.

In this embodiment of the present invention, a dual connection indicates that the UE has at least two connections. For example, before the 3GPP handover, the UE is connected to both the first 3GPP access device and a third access device. After the 3GPP handover, the UE still has at least two connections: the UE is connected to both the second 3GPP access device and the third access device.

As an example, the determining, by a first 3GPP access device, whether a 3GPP handover needs to be performed for UE may specifically include the following process:
When the UE detects that quality of service of the first 3GPP access device currently providing an access service cannot meet a current quality of service requirement, the UE reports a measurement result of signal quality (for example, reference signal received power or reference signal received quality) of the second 3GPP access device to the first 3GPP access device; and the first 3GPP access device determines, according to the measurement result of the signal quality, whether the UE needs to be handed over to the second 3GPP access device. If the UE can be handed over to the second 3GPP access device (for example, the measurement result of the signal quality of the second 3GPP access device indicates that the second 3GPP access device can provide the UE with a service satisfying the quality of service requirement), the first 3GPP access device may disconnect the connection to the UE and instruct the UE to be connected to the second 3GPP access device. During this process, the connection between the UE and the third access device remains unchanged.

Optionally, to avoid co-channel interference, the first 3GPP access device and the third access device may have different access technologies, and the second 3GPP access device and the third access device may have different access technologies.

102: The first 3GPP access device sends connection information between the UE and the third access device to the second 3GPP access device, where the connection information is used by the second 3GPP access device to control service transmission of the UE.

For example, in a case in which load of the third access device increases and a QoS requirement of a service, carried by the third access device, of the UE cannot be met, the second 3GPP access device may hand over the service in the third access device back to the second 3GPP access device according to the connection information, and the second 3GPP access device continues to guarantee QoS of the service and ensure user experience. However, in a case in which load of the second access device increases and QoS requirements of services carried by the second 3GPP access device cannot be met, the second 3GPP access device may hand over the UE to the third access device according to the connection information, so that service offloading is performed for the second 3GPP access.

This embodiment of the present invention further provides an illustration of the connection information. The connection information at least includes at least one of the following: identification ID information, security configuration-related information, load information, and radio channel information of the third access device, and information about a service that is currently carried on a connection to the third access device. The identification ID information of the third access device may be used to uniquely identify the third access device, so that the second 3GPP access device can find the third access device, and obtain status information, such as load, related to the third access device by means of interaction. The security configuration-related information is used to indicate a security access level of the third access device, so as to determine whether services of the UE, for example, some security sensitive services (such as online banking or personal privacy) are suitable to be carried by the third access device. The load information is used to indicate load information of the third access device, so that services carried by the third access device are controlled more desirably and QoS requirements of the services are guaranteed as far as possible. The radio channel information is used to acquire signal strength, signal quality, or the like provided by the third access device for the UE, so as to determine whether the service transmission of the UE is suitable to be carried by the third access device.

It should be noted that the connection information described above is used to control service transmission of the UE; however, for different services and different items that need to be controlled, connection information may be different. It may be understood by a person skilled in the art that different connection information may be selected according to different items to be controlled and different services, and therefore, the foregoing illustration of the connection information should not be construed as a limitation to this embodiment of the present invention.

When the technical solution provided by this embodiment of the present invention is applied, during a handover of UE from a first 3GPP access device to a second 3GPP access device, the first 3GPP access device notifies the second 3GPP access device of connection information that is used by the second 3GPP access device to control transmission of a service, carried by a third access device, of the UE, so that after the 3GPP handover is performed for the UE, transmission of service data, carried by the third access device, of the UE can continue to be controlled by a 3GPP access device without an interruption, thereby guaranteeing QoS of the service and improving user experience of the UE.

FIG. 2 is a schematic flowchart of another communication method in dual connection mode according to an embodiment of the present invention. The method embodiment shown in FIG. 2 may be combined with the method embodiment shown in FIG. 1B, and the concept and process described in FIG. 1B are still applicable to this embodiment. The method includes the following content.

201: When a first 3GPP access device determines that UE needs to be handed over from the first 3GPP access device to the second 3GPP access device, the second 3GPP access device receives connection information between the UE and a third access device sent by the first 3GPP access device, where the connection information is used by the second 3GPP access device to control service transmission of the UE in the third access device.

In this embodiment of the present invention, a dual connection indicates that the UE has at least two connections. For example, before the 3GPP handover, the UE is connected to both the first 3GPP access device and the third access device. After the 3GPP handover, the UE still has at least two connections: the UE is connected to both the second 3GPP access device and the third access device.

Optionally, to avoid co-channel interference, the first 3GPP access device and the third access device may have different access technologies, and the second 3GPP access device and the third access device may have different access technologies.

202: The second 3GPP access device controls the service transmission of the UE in the third access device according to the connection information between the UE and the third access device after the UE is handed over to the second 3GPP access device and a connection between the UE and the second 3GPP access device is established.

Optionally, in this embodiment, the connection information includes at least one of the following:
identification ID information, security configuration-related information, load information, and radio channel information of the third access device, and information about a service that is currently carried on a connection to the third access device.

When the technical solution provided by this embodiment of the present invention is applied, during a handover of UE from a first 3GPP access device to a second 3GPP access device, the first 3GPP access device notifies the second 3GPP access device of connection information that is used by the second 3GPP access device to control transmission of a service, carried by a third access device, of the UE, so that after the 3GPP handover is performed for the UE, transmission of service data, carried by the third access device, of the UE can continue to be controlled by a 3GPP access device without an interruption, thereby guaranteeing QoS of the service and improving user experience of the UE.

The following embodiments provide more detailed illustrations based on four possible application scenarios. The four possible application scenarios are further refinements based on the embodiments shown in FIG. 1B and FIG. 2, and the concepts and processes of FIG. 1 and FIG. 2 are still applicable to the four possible application scenarios.

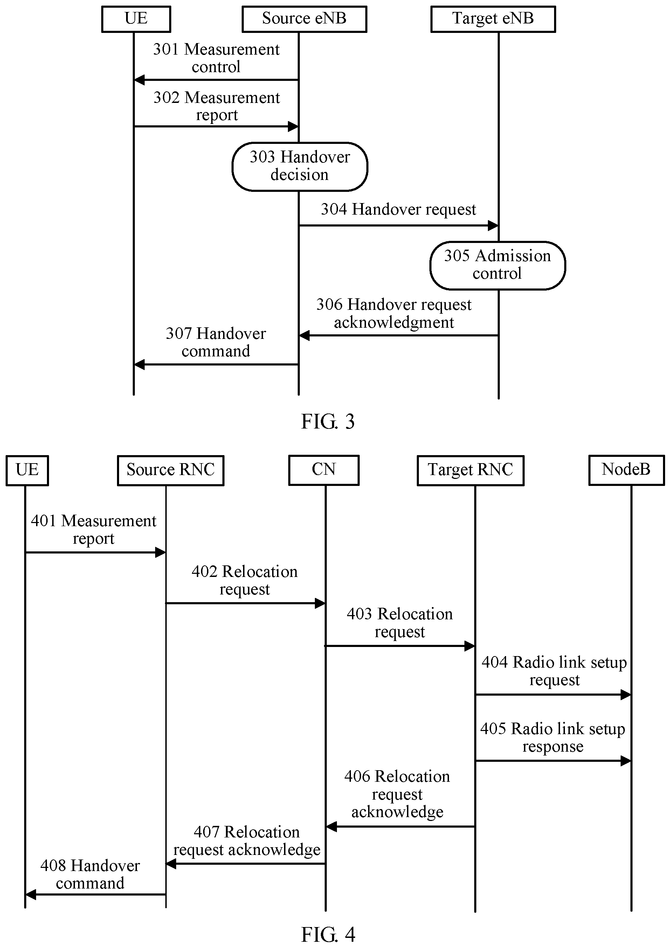

As a possible implementation manner, FIG. 3 is a schematic flowchart of a communication method in dual connection mode according to an embodiment of the present invention. The method includes the following content.

An application scenario of this embodiment is a handover in an LTE system. An example in which a first 3GPP access device is a source evolved NodeB (source eNB), a second 3GPP access device is a target evolved NodeB (target eNB), and a third access device is a WLAN AP is used. For a specific process, refer to FIG. 3, where the process includes:
301: A source eNB delivers measurement control (measurement control), where the measurement control may include some configuration information (for example, information indicating intra-frequency measurement or inter-frequency measurement, and measurement frequency) for measurement performed by UE; for specific configuration information, refer to related standard definitions (for example, 3GPP TS 36.311) for measurement performed by the UE, and this embodiment of the present invention does not limit the specific configuration information.
302: After receiving the measurement control, the UE performs measurement according to the configuration information carried in the measurement control and reports measurement reports (measurement reports) after a condition is satisfied. The satisfied condition may be periodic reporting or event-triggered reporting, which is not limited in this embodiment of the present invention.
303: The source eNB decides, according to the measurement reports and by comprehensively considering other factors, whether to initiate a handover. The other factors may be: if the source eNB has received an overload indication of a target eNB, the source eNB does not initiate a handover of the UE to the target eNB; or if it is configured that the source eNB is not allowed to initiate a handover of the UE to the target eNB, the source eNB does not make a decision of handing over the UE to the target eNB. If the source eNB decides to initiate a handover, go to 304; if the source eNB does not initiate a handover, the source eNB may continue to perform 301 or the process may be ended. In this step, a handover decision (HO decision) is performed, that is, whether to initiate a handover is decided according to the measurement reports.

The other factors that are comprehensively considered may be any control rules related to whether a handover needs to be initiated, and rules for deciding whether to perform a handover do not affect the implementation of this embodiment of the present invention, and this embodiment of the present invention does not limit the specific implementation of deciding whether to perform a handover.

304: The source eNB sends a handover request (handover request) command to the target eNB, where the command includes an indication indicating whether a WLAN connection exists currently, and if the WLAN connection exists, the command may further include connection information between the UE and the WLAN AP, for example, an IP (Internet Protocol) address, a MAC (Media Access Control) address, an SSID (service set identifier), security configuration-related information, and load information of the WLAN AP, and information about a service that is currently offloaded to the WLAN.

In this step, the connection information is sent to the target eNB, and if the UE is successfully handed over to the target eNB, the target eNB may control service transmission of the UE according to the connection information.

305: The target eNB decides whether to accept the UE according to the connection information between the UE and the WLAN AP in the handover request command. It may be understood that if the target eNB does not accept the UE, a related indication indicating that the UE is not accepted may be replied and then the process is ended. If the target eNB accepts the UE, go to 306. In this step, admission control (admission control) is performed, that is, the target eNB decides whether to allow the handover of the UE to the target eNB.

306: The target eNB sends a handover request acknowledge (handover request ack) command to the source eNB, where the handover request acknowledge command indicates whether the UE is allowed to be handed over to the target eNB, and the handover request acknowledge command may further include some configuration information of the target eNB for the UE. The configuration information is some necessary information (for example, a dedicated preamble allocated by the target eNB to the UE and a random access channel resource of the target eNB) for the handover of the UE to the target eNB, and this embodiment of the present invention does not limit specific information content.

307: The source eNB delivers a handover command (handover command), and the UE is connected to the target eNB after receiving the handover command. When this step is completed, the whole handover process is ended.

When the technical solution provided by this embodiment of the present invention is applied, during a handover of UE from a source eNB to a target eNB, the source eNB notifies the target eNB of connection information that is used by the target eNB to control transmission of a service, carried by a WLAN AP, of the UE, so that after the 3GPP handover is performed for the UE, transmission of service data, carried by the WLAN AP, of the UE can continue to be controlled by a 3GPP access device without an interruption, thereby guaranteeing QoS of the service and improving user experience of the UE.

As another possible implementation manner, FIG. 4 is a schematic flowchart of a communication method in dual connection mode according to an embodiment of the present invention. The method includes the following content.

An application scenario of this embodiment is a handover in a UMTS (Universal Mobile Telecommunications System), and a control entity in the UMTS is an RNC. An example in which a first 3GPP access device is a source RNC, a second 3GPP access device is a target RNC (radio network controller), and a third access device is a WLAN AP is used. For a specific process, refer to FIG. 4, where the process includes:
401: A source RNC delivers measurement control, where the measurement control may include some configuration information for measurement performed by UE, and after receiving the measurement control, the UE performs measurement according to the configuration information in the measurement control and reports measurement reports after a condition is satisfied.

For specific configuration information, refer to related standard definitions (for example, 3GPP TS 36.331) for measurement performed by the UE, and this embodiment of the present invention does not limit the specific configuration information. The satisfied condition may be periodic reporting or event-triggered reporting, which is not limited in this embodiment of the present invention.

402: The source RNC decides, according to the measurement reports and by comprehensively considering other factors, whether to initiate a handover. The other factors may be: if the source RNC has received an overload indication of a target RNC, the source RNC does not initiate a handover of the UE to the target RNC; or if it is configured that the source RNC is not allowed to initiate a handover of the UE to the target RNC, the source RNC does not make a decision of handing over the UE to the target RNC. If the handover causes RNC relocation, the source RNC sends a relocation request (relocation request) command to the target RNC, where the command includes an indication indicating whether a connection between the UE and a WLAN exists currently, and if the connection between the UE and the WLAN exists, the relocation request command may further include connection information between the UE and a WLAN AP, for example, an IP address, a MAC address, an SSID, security configuration-related information, and load information of the WLAN AP, and information about a service that is currently offloaded to the WLAN. It should be noted that, the relocation request command sent by the source RNC to the target RNC in this step is sent to a core network (Core Network, CN) first, and then, referring to 403, the CN forwards the relocation request command to the target RNC.

In this step, if the source RNC decides to initiate a handover, go to 403; if the source RNC does not initiate a handover, the source RNC may continue to perform 401, or the process may be ended. In this step, a HO decision is performed, that is, whether to initiate a handover is decided according to the measurement reports.

The other factors that are comprehensively considered may be any control rules related to whether a handover needs to be initiated, and rules for deciding whether to perform a handover do not affect the implementation of this embodiment of the present invention, and this embodiment of the present invention does not limit the specific implementation of deciding whether to perform a handover.

403: The core network forwards the relocation request command to the target RNC.

In this step, the connection information is sent to the target RNC, and if the UE is successfully handed over to the target RNC, the target RNC may control service transmission of the UE according to the connection information. For example, if load of the WLAN AP exceeds a threshold, the target RNC may hand over transmission of a service, carried by the WLAN, of the UE to a 3GPP network on which the target RNC is located; and when load of the 3GPP network on which the target RNC is located exceeds a threshold, the target RNC may hand over transmission of the service carried by the 3GPP network back to the WLAN, and therefore, the service is offloaded from the 3GPP network.

404: After receiving the relocation request, the target RNC sends a radio link setup request (radio link setup request) to a target NodeB managed by the target RNC.

405: The target NodeB reserves a radio link resource for the UE and returns a radio link setup response (radio link setup response).

406: The target RNC returns a relocation request acknowledge (relocation request acknowledge) command to the source RNC.

407: The core network forwards the relocation request acknowledge command to the source RNC.

408: The source RNC delivers a handover command, and the UE is connected to the target NodeB after receiving the handover command.

When the technical solution provided by this embodiment of the present invention is applied, during a handover of UE from a source RNC to a target RNC, the source RNC notifies the target RNC of connection information that is used by the target RNC to control transmission of a service, carried by a WLAN AP, of the UE, so that after the 3GPP handover is performed for the UE, transmission of service data, carried by the WLAN AP, of the UE can continue to be controlled by a 3GPP access device without an interruption, thereby guaranteeing QoS of the service and improving user experience of the UE.

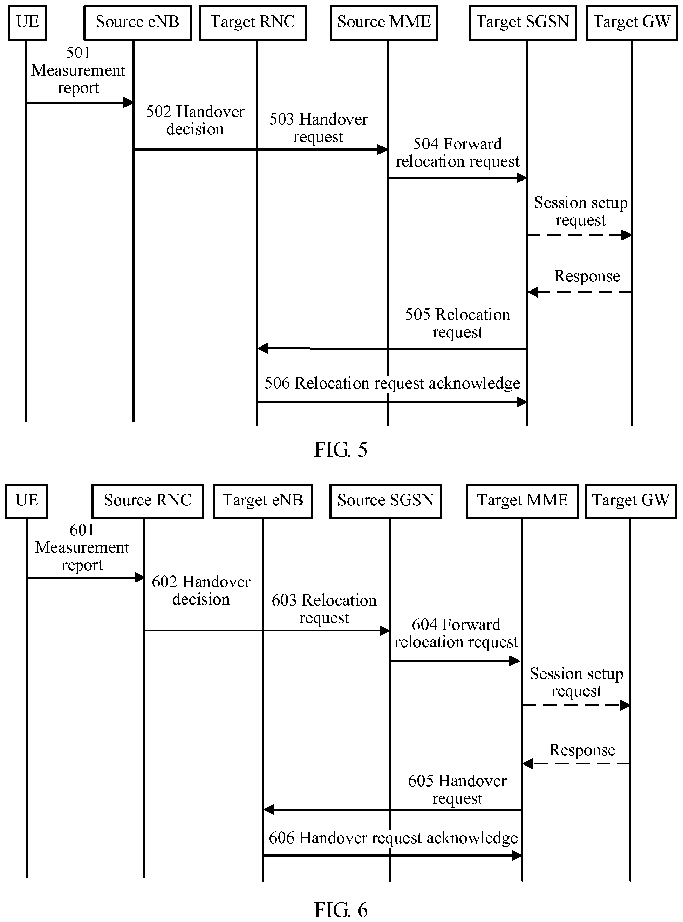

As another possible implementation manner, FIG. 5 is a schematic flowchart of a communication method in dual connection mode according to an embodiment of the present invention. The method includes the following content.

An application scenario of this embodiment is a handover from LTE to a UMTS. An example in which a first 3GPP access device is a source eNB, a second 3GPP access device is a target RNC, and a third access device is a WLAN AP is used. For a specific process, refer to FIG. 5.

501: A source eNB delivers measurement control, where the measurement control may include some configuration information (for example, information indicating intra-frequency measurement or inter-frequency measurement, and measurement frequency) for measurement performed by UE.

After receiving the measurement control, the UE performs measurement according to the configuration information in the measurement control, and reports measurement reports after a condition is satisfied. For specific configuration information, refer to related standard definitions for measurement performed by the UE, and this embodiment of the present invention does not limit the specific configuration information. The satisfied condition may be periodic reporting or event-triggered reporting, which is not limited in this embodiment of the present invention.

502: The source eNB decides, according to the measurement reports and by comprehensively considering other factors, whether to initiate a handover. The other factors may be: if the source eNB has received an overload indication of a target RNC, the source eNB does not initiate a handover of the UE to the target RNC; or if it is configured that the source eNB is not allowed to initiate a handover of the UE to the target RNC, the source eNB does not make a decision of handing over the UE to the target RNC. If the source eNB decides to initiate a handover, go to 503; if the source eNB does not initiate a handover, the source eNB may continue to perform 501, or the process may be ended. In this step, a HO decision is performed, that is, whether to initiate a handover is decided according to the measurement reports.

The other factors that are comprehensively considered may be any control rules related to whether a handover needs to be initiated, and rules for deciding whether to perform a handover do not affect the implementation of this embodiment of the present invention, and this embodiment of the present invention does not limit the specific implementation of deciding whether to perform a handover.

503: The source eNB sends a handover request command to a source MME (Mobile Management Entity, mobile management entity). The handover request command includes an indication indicating whether a connection between the UE and a WLAN exists currently; and if the connection between the UE and the WLAN exists, the handover request command may further include connection information between the UE and a WLAN AP, for example, an IP address, a MAC address, an SSID, security configuration-related information, and load information of the WLAN AP, and information about a service that is currently offloaded to the WLAN.

504: The source MME sends a forward (forward) relocation request command to a target SGSN according to the received handover request command. The forward relocation request command includes an indication indicating whether a connection between the UE and the WLAN exists currently; and if the connection between the UE and the WLAN exists, the forward relocation request command may further include connection information between the UE and the WLAN AP, for example, an IP address, a MAC address, an SSID, security configuration-related information, and load information of the WLAN AP, and information about a service that is currently offloaded to the WLAN.

Optionally, according to a direction of a dotted arrow shown in FIG. 5, the target SGSN (Serving General Packet Radio Service Supporting Node, serving general packet radio service supporting node) sends a session setup request command to a target serving (Target serving) GW (gateway). The target serving GW responds to the session setup request command.

505: The target SGSN sends a relocation request command to the target RNC according to the received forward relocation request command, where the forward relocation request command includes an indication indicating whether a connection between the UE and the WLAN exists currently; and if the connection between the UE and the WLAN exists, the forward relocation request command may further include connection information between the UE and the WLAN AP, for example, an IP address, a MAC address, an SSID, security configuration-related information, and load information of the WLAN AP, and information about a service that is currently offloaded to the WLAN.

In this step, the connection information is sent to the target RNC, and if the UE is successfully handed over to the target RNC, the target RNC may control service transmission of the UE according to the connection information.

506: The target RNC returns a relocation request acknowledge command.

When the technical solution provided by this embodiment of the present invention is applied, during a handover of UE from a source eNB to a target RNC, the source eNB notifies the target RNC of connection information that is used by the target RNC to control transmission of a service, carried by a WLAN AP, of the UE, so that after the 3GPP handover is performed for the UE, transmission of service data, carried by the WLAN AP, of the UE can continue to be controlled by a 3GPP access device without an interruption, thereby guaranteeing QoS of the service and improving user experience of the UE.

As another possible implementation manner, FIG. 6 is a schematic flowchart of a communication method in dual connection mode according to an embodiment of the present invention. The method includes the following content.

An application scenario of this embodiment is a handover from a UMTS to LTE, and a control entity in the UMTS is an RNC. An example in which a first 3GPP access device is a source RNC, a second 3GPP access device is a target eNB, and a third access device is a WLAN AP is used. For a specific process, refer to FIG. 6, where the process includes:
601: A source RNC delivers measurement control, where the measurement control may include some configuration information (for example, information indicating intra-frequency measurement or inter-frequency measurement, and measurement frequency) for measurement performed by UE, and after receiving the measurement control, the UE performs measurement according to the configuration information in the measurement control and reports measurement reports after a condition is satisfied. For specific configuration information, refer to related standard definitions for measurement performed by the UE, and this embodiment of the present invention does not limit the specific configuration information. The satisfied condition may be periodic reporting or event-triggered reporting, which is not limited in this embodiment of the present invention.
602: The source RNC decides, according to the measurement reports and by comprehensively considering other factors, whether to initiate a handover. The other factors may be: if the source RNC has received an overload indication of a target eNB, the source RNC does not initiate a handover of the UE to the target eNB; or if it is configured that the source RNC is not allowed to initiate a handover of the UE to the target eNB, the source RNC does not make a decision of handing over the UE to the target eNB. If the source RNC decides to initiate a handover, go to 603; if the source RNC does not initiate a handover, the source RNC may continue to perform 601, or the process may be ended. In this step, a HO decision is performed, that is, whether to initiate a handover is decided according to the measurement reports.

The other factors that are comprehensively considered may be any control rules related to whether a handover needs to be initiated, and rules for deciding whether to perform a handover do not affect the implementation of this embodiment of the present invention, and this embodiment of the present invention does not limit the specific implementation of deciding whether to perform a handover.

603: The source RNC sends a relocation request command to a source SGSN, where the relocation request command includes an indication indicating whether a connection between the UE and a WLAN exists currently; and if the connection between the UE and the WLAN exists, the relocation request command may further include connection information between the UE and the WLAN AP, for example, an IP address, a MAC address, an SSID, security configuration-related information, and load information of the WLAN AP, and information about a service that is currently offloaded to the WLAN.

604: The source SGSN sends a forward relocation request command to a target MME according to the received relocation request command. The forward relocation request command includes an indication indicating whether a connection between the UE and the WLAN exists currently; and if the connection between the UE and the WLAN exists, the forward relocation request command may further include connection information between the UE and the WLAN AP, for example, an IP address, a MAC address, an SSID, security configuration-related information, and load information of the WLAN AP, and information about a service that is currently offloaded to the WLAN.

Optionally, according to a direction of a dotted arrow shown in FIG. 6, the target MME sends a session setup request command to a target serving GW The target serving GW responds to the session setup request command.

605: The target MME sends a handover request command to the target eNB according to the received forward relocation request command. The handover request command includes an indication indicating whether a connection between the UE and the WLAN exists currently; and if the connection between the UE and the WLAN exists, the handover request command may further include connection information between the UE and the WLAN AP, for example, an IP address, a MAC address, an SSID, security configuration-related information, and load information of the WLAN AP, and information about a service that is currently offloaded to the WLAN.

In this step, the connection information is already sent to the target eNB, and if the UE is successfully handed over to the target eNB, the target eNB may control service transmission of the UE according to the connection information.

606: The target eNB returns a handover request acknowledge command.

When the technical solution provided by this embodiment of the present invention is applied, during a handover of UE from a source RNC to a target eNB, the source RNC notifies the target eNB of connection information that is used by the target eNB to control transmission of a service, carried by a WLAN AP, of the UE, so that after the 3GPP handover is performed for the UE, transmission of service data, carried by the WLAN AP, of the UE can continue to be controlled by a 3GPP access device without an interruption, thereby guaranteeing QoS of the service and improving user experience of the UE.

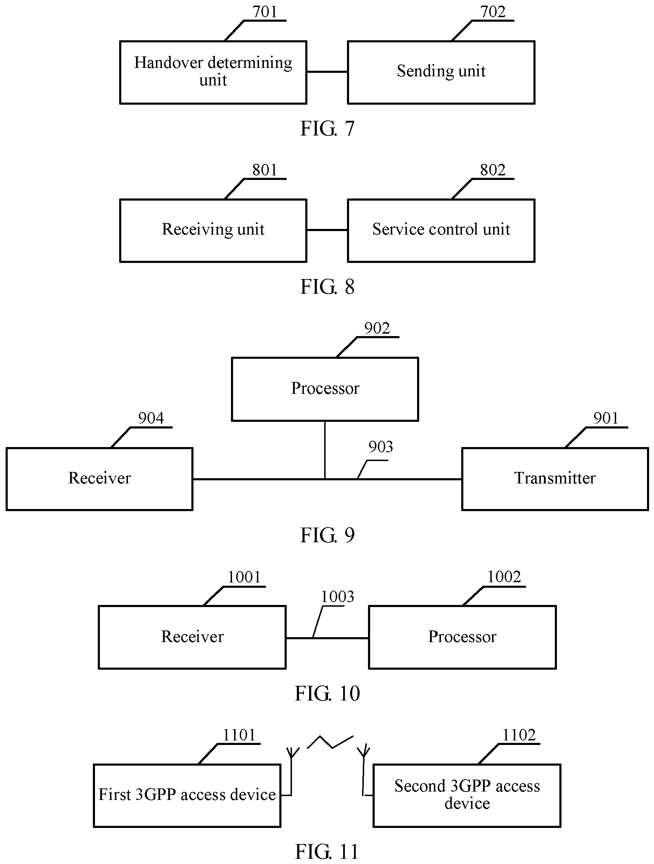

FIG. 7 is a schematic structural diagram of a first 3GPP access device 70 according to an embodiment of the present invention. The first 3GPP access device 70 may perform actions performed by a first 3GPP access device in any embodiment of FIG. 1B to FIG. 6. For the concept and process described in any embodiment of FIG. 1B to FIG. 6, details are not described in this embodiment again. The first 3GPP access device 70 includes a handover determining unit 701 and a sending unit 702.

The handover determining unit 701 is configured to determine whether a 3GPP handover needs to be performed for user equipment UE, where the 3GPP handover is a handover from the first 3GPP access device to a second 3GPP access device.

The sending unit 702 is configured to send connection information between the UE and a third access device to the second 3GPP access device after the handover determining unit 701 determines that the 3GPP handover needs to be performed for the UE, where the connection information is used by the second 3GPP access device to control service transmission of the UE.

Optionally, the third access device and the first 3GPP access device 70 have different access technologies, and the third access device and the second 3GPP access device have different access technologies.

Optionally, the connection information at least includes at least one of the following: identification ID information, security configuration-related information, load information, and radio channel information of the third access device, and information about a service that is currently carried on a connection to the third access device.

FIG. 8 is a schematic structural diagram of a second 3GPP access device 80 according to an embodiment of the present invention. The second 3GPP access device 80 may perform actions performed by a second 3GPP access device in any embodiment of FIG. 1B to FIG. 6. For the concept and process described in any embodiment of FIG. 1B to FIG. 6, details are not described in this embodiment again. As shown in FIG. 8, the second 3GPP access device 80 includes: a receiving unit 801 and a service control unit 802.

The receiving unit 801 is configured to: when a first 3GPP access device determines that UE needs to be handed over from the first 3GPP access device to the second 3GPP access device 80, receive connection information between the UE and a third access device sent by the first 3GPP access device, where the connection information is used by the second 3GPP access device 80 to control service transmission of the UE in the third access device.

The service control unit 802 is configured to: after the UE is handed over to the second 3GPP access device and a connection between the UE and the second 3GPP access device is established, control the service transmission of the UE in the third access device according to the connection information received by the receiving unit 801.

The first 3GPP access device and the third access device are devices that the UE is currently connected to.

Optionally, the connection information includes at least one of the following:
identification ID information, security configuration-related information, load information, and radio channel information of the third access device, and information about a service that is currently carried on a connection to the third access device.

When the technical solution provided by this embodiment of the present invention is applied, during a handover of UE from a first 3GPP access device to a second 3GPP access device, the first 3GPP access device notifies the second 3GPP access device of connection information that is used by the second 3GPP access device to control transmission of a service, carried by a third access device, of the UE, so that after the 3GPP handover is performed for the UE, transmission of service data, carried by the third access device, of the UE can continue to be controlled by the 3GPP access device without an interruption, thereby guaranteeing QoS of the service and improving user experience of the UE.

FIG. 9 is a schematic structural diagram of another first 3GPP access device 90 according to an embodiment of the present invention. The first 3GPP access device 90 may perform actions performed by a first 3GPP access device in any embodiment of FIG. 1B to FIG. 6. For the concept and process described in any embodiment of FIG. 1B to FIG. 6, details are not described in this embodiment again. As shown in FIG. 9, the first 3GPP access device 90 includes: a transmitter 901, a processor 902, and a system bus 903 that connects the transmitter 901 and the processor 902.

The processor 902 is configured to determine whether a 3GPP handover needs to be performed for a UE, where the 3GPP handover is a handover from the first 3GPP access device 90 to a second 3GPP access device.

The transmitter 901 is configured to send connection information between the UE and a third access device to the second 3GPP access device, where the connection information is used by the second 3GPP access device to control service transmission of the UE.

Optionally, the first 3GPP access device 90 may further include a receiver 904, configured to receive a radio signal from an antenna port and transmit the radio signal to the processor 902 for processing.

Optionally, the connection information at least includes at least one of the following: identification ID information, security configuration-related information, load information, and radio channel information of the third access device, and information about a service that is currently carried on a connection to the third access device.

FIG. 10 shows another second 3GPP access device 100 according to an embodiment of the present invention. The second 3GPP access device 100 may perform actions performed by a second 3GPP access device in any embodiment of FIG. 1B to FIG. 6. For the concept and process described in any embodiment of FIG. 1B to FIG. 6, details are not described in this embodiment again. As shown in FIG. 10, the second 3GPP access device 100 includes: a receiver 1001, a processor 1002, and a bus 1003 that is configured to connect the receiver 1001 and the processor 1002.

The receiver 1001 is configured to: when a first 3GPP access device determines that UE needs to be handed over from the first 3GPP access device to the second 3GPP access device 100, receive connection information between the UE and a third access device sent by the first 3GPP access device, where the connection information is used by the second 3GPP access device to control service transmission of the UE in the third access device.

The processor 1002 is configured to: after the UE is handed over to the second 3GPP access device 100 and a connection between the UE and the second 3GPP access device 100 is established, control the service transmission of the UE in the third access device according to the connection information received by the receiver 1001.

The first 3GPP access device and the third access device are devices that the UE is currently connected to.

Optionally, the connection information includes at least one of the following:
identification ID information, security configuration-related information, load information, and radio channel information of the third access device, and information about a service that is currently carried on a connection to the third access device.

When the technical solution provided by this embodiment of the present invention is applied, during a handover of UE from a first 3GPP access device to a second 3GPP access device, the first 3GPP access device notifies the second 3GPP access device of connection information that is used by the second 3GPP access device to control transmission of a service, carried by a third access device, of the UE, so that after the 3GPP handover is performed for the UE, transmission of service data, carried by the third access device, of the UE can continue to be controlled by a 3GPP access device without an interruption, thereby guaranteeing QoS of the service and improving user experience of the UE.

An embodiment of the present invention further provides a communication system, as shown in FIG. 11, including:
a first 3GPP access device 1101 and a second 3GPP access device 1102, where
the first 3GPP access device 1101 is the first 3GPP access device shown in FIG. 7, and the second 3GPP access device 1102 is the second 3GPP access device shown in FIG. 8; or the first 3GPP access device 1101 is the first 3GPP access device shown in FIG. 9, and the second 3GPP access device 1102 is the second 3GPP access device shown in FIG. 10.

It should be noted that, the apparatus division is merely logical function division, but the present invention is not limited to the foregoing division, as long as corresponding functions can be implemented. In addition, specific names of the functional units are merely provided for the purpose of distinguishing the units from one another, but are not intended to limit the protection scope of the present invention.

In addition, a person of ordinary skill in the art may understand that all or a part of the steps of the method embodiments may be implemented by a program instructing relevant hardware. The program may be stored in a computer readable storage medium. The storage medium may include: a read-only memory, a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the embodiments of the present invention shall fall within the protection scope of the present invention. Therefore, the protection scope of the present invention shall be subject to the protection scope of the claims.

## Claims

1. A communication method in dual connection mode, comprising:
determining (101), by a first Third Generation Partnership Project, 3GPP, access device, whether a 3GPP handover needs to be performed for user equipment, UE, wherein the 3GPP handover is a handover from the first 3GPP access device to a second 3GPP access device;
sending (102), by the first 3GPP access device, connection information between the UE and a third access device to the second 3GPP access device when the first 3GPP access device determines that the 3GPP handover needs to be performed for the UE, wherein the connection information is configured for being used to control service transmission of the UE in the third access device by the second 3GPP access device, wherein the first 3GPP access device and the third access device are devices that the UE is currently connected to, **characterized in that**: the third access device is a device in a wireless local area network, WLAN, and the connection information comprises security configuration-related information of the third access device.

2. The method according to claim 1, wherein the connection information further comprises at least one of the following:
Identification, ID, information, load information, and radio channel information of the third access device, and information about a service that is currently carried on a connection to the third access device.

3. The method according to claim 1 or 2, the method further comprises:
when the first 3GPP access device determines that the 3GPP handover needs to be performed for the UE, the first 3GPP access device disconnects the connection to the UE and instruct the UE to be connected to the second 3GPP access device, wherein the connection between the UE and the third access device remains unchanged.

4. A communication method in dual connection mode, comprising:
receiving (201), by a second Third Generation Partnership Project, 3GPP, access device when a first 3GPP access device determines that user equipment, UE, needs to be handed over from the first 3GPP access device to the second 3GPP access device, connection information between the UE and a third access device sent by the first 3GPP access device, wherein the first 3GPP access device and the third access device are devices that the UE is currently connected to; and
controlling (202), by the second 3GPP access device, the service transmission of the UE in the third access device according to the connection information between the UE and the third access device after the UE is handed over to the second 3GPP access device and a connection between the UE and the second 3GPP access device is established, **characterized in that**: the third access device is a device in a wireless local area network, WLAN, and the connection information comprises security configuration-related information of the third access device.

5. The method according to claim 4, wherein the connection information further comprises at least one of the following:
Identification, ID, information, load information, and radio channel information of the third access device, and information about a service that is currently carried on a connection to the third access device.

6. A first 3GPP access device, comprising:
a handover determining unit (701), configured to determine whether a Third Generation Partnership Project, 3GPP, handover needs to be performed for user equipment, UE, wherein the 3GPP handover is a handover from the first 3GPP access device to a second 3GPP access device; and
a sending unit (702), configured to send connection information between the UE and a third access device to the second 3GPP access device when the handover determining unit determines that the 3GPP handover needs to be performed for the UE, wherein the connection information is configured for being used to control service transmission of the UE in the third access device by the second 3GPP access device, wherein the first 3GPP access device and the third access device are devices that the UE is currently connected to, **characterized in that**: the third access device is a device in a wireless local area network, WLAN, and the connection information comprises security configuration-related information of the third access device.

7. The device according to claim 6, wherein the connection information further comprises at least one of the following: identification, ID, information, load information, and radio channel information of the third access device, and information about a service that is currently carried on a connection to the third access device.

8. The device according to claim 6 or 7, wherein the handover determining unit (701) is further configured to:
when the first 3GPP access device determines that the 3GPP handover needs to be performed for the UE, disconnect the connection to the UE and instruct the UE to be connected to the second 3GPP access device, wherein the connection between the UE and the third access device remains unchanged.

9. A second 3GPP access device, comprising:
a receiving unit (801), configured to: when a first, Third Generation Partnership Project, 3GPP, access device determines that user equipment, UE, needs to be handed over from the first 3GPP access device to the second 3GPP access device, receive connection information between the UE and a third access device sent by the first 3GPP access device, wherein the first 3GPP access device and the third access device are devices that the UE is currently connected to; and
a service control unit (802), configured to: after the UE is handed over to the second 3GPP access device and a connection between the UE and the second 3GPP access device is established, control the service transmission of the UE in the third access device according to the connection information between the UE and the third access device received by the receiving unit, **characterized in that**: the third access device is a device in a wireless local area network, WLAN, and the connection information comprises security configuration-related information of the third access device.

10. The device according to claim 9, wherein the connection information further comprises at least one of the following:
Identification, ID, information, load information, and radio channel information of the third access device, and information about a service that is currently carried on a connection to the third access device.

11. A communication system comprising:
a first 3GPP access device (1101) according to any of claims 6 to 8; and a second 3GPP access device (1102) according to claim 9 or 10.

## Patentansprüche

1. Kommunikationsverfahren in einem dualen Verbindungsmodus, das Folgendes umfasst:
Bestimmen (101), durch eine erste Third Generation Partnership Project (3GPP)-Zugangsvorrichtung, ob eine 3GPP-Übergabe für eine Benutzerausrüstung, UE (User Equipment), durchgeführt werden muss, wobei die 3GPP-Übergabe eine Übergabe von der ersten 3GPP-Zugangsvorrichtung zu einer zweiten 3GPP-Zugangsvorrichtung ist;
Senden (102), durch die erste 3GPP-Zugangsvorrichtung, von Verbindungsinformationen zwischen der UE und einer dritten Zugangsvorrichtung an die zweite 3GPP-Zugangsvorrichtung, wenn die erste 3GPP-Zugangsvorrichtung bestimmt, dass die 3GPP-Übergabe für die UE durchgeführt werden muss, wobei die Verbindungsinformationen konfiguriert sind, für ein Steuern einer Dienstübertragung der UE in der dritten Zugangsvorrichtung durch die zweite 3GPP-Zugangsvorrichtung verwendet wird, wobei die erste 3GPP-Zugangsvorrichtung und die dritte Zugangsvorrichtung Vorrichtungen sind, mit denen die UE derzeit verbunden ist, **dadurch gekennzeichnet, dass**: die dritte Zugangsvorrichtung eine Vorrichtung in einem drahtlosen lokalen Netzwerk, WLAN (Wireless Local Area Network), ist und die Verbindungsinformationen sicherheitkonfigurations-bezogene Informationen der dritten Zugangsvorrichtung umfassen.

2. Verfahren nach Anspruch 1, wobei die Verbindungsinformationen ferner mindestens eines von Folgendem umfassen:
Identifikation, ID, Informationen, Lastinformationen und Funkkanalinformationen der dritten Zugangsvorrichtung und Informationen über einen Dienst, der derzeit auf einer Verbindung mit der dritten Zugangsvorrichtung ausgeführt wird.

3. Verfahren nach Anspruch 1 oder 2, wobei das Verfahren ferner Folgendes umfasst:
wenn die erste 3GPP-Zugangsvorrichtung bestimmt, dass die 3GPP-Übergabe für die UE durchgeführt werden muss, trennt die erste 3GPP-Zugangsvorrichtung die Verbindung mit der UE und weist die UE an, sich mit der zweiten 3GPP-Zugangsvorrichtung zu verbinden, wobei die Verbindung zwischen der UE und der dritten Zugangsvorrichtung unverändert bleibt.

4. Kommunikationsverfahren in einem dualen Verbindungsmodus, das Folgendes umfasst:
Empfangen (201), durch eine zweite Third Generation Partnership Project (3GPP)-Zugangsvorrichtung, wenn eine erste 3GPP-Zugangsvorrichtung bestimmt, dass die Benutzerausrüstung, UE, von der ersten 3GPP-Zugangsvorrichtung an die zweite 3GPP-Zugangsvorrichtung übergeben werden muss, von durch die erste 3GPP-Zugangsvorrichtung gesendeten Verbindungsinformationen zwischen der UE und einer dritten Zugangsvorrichtung, wobei die erste 3GPP-Zugangsvorrichtung und die dritte Zugangsvorrichtung Vorrichtungen sind, mit denen die UE derzeit verbunden ist; und
Steuern (202), durch die zweite 3GPP-Zugangsvorrichtung, der Dienstübertragung der UE in der dritten Zugangsvorrichtung gemäß den Verbindungsinformationen zwischen der UE und der dritten Zugangsvorrichtung, nachdem die UE an die zweite 3GPP-Zugangsvorrichtung übergeben und eine Verbindung zwischen der UE und der zweiten 3GPP-Zugangsvorrichtung hergestellt ist, **dadurch gekennzeichnet, dass**: die dritte Zugangsvorrichtung eine Vorrichtung in einem drahtlosen lokalen Netzwerk, WLAN, ist und die Verbindungsinformationen sicherheitkonfigurations-bezogene Informationen der dritten Zugangsvorrichtung umfassen.

5. Verfahren nach Anspruch 4, wobei die Verbindungsinformationen ferner mindestens eines von Folgendem umfassen:
Identifikation, ID, Informationen, Lastinformationen und Funkkanalinformationen der dritten Zugangsvorrichtung und Informationen über einen Dienst, der derzeit auf einer Verbindung mit der dritten Zugangsvorrichtung ausgeführt wird.

6. Erste 3GPP-Zugangsvorrichtung, die Folgendes umfasst:
eine Übergabebestimmungseinheit (701), die konfiguriert ist, zu bestimmen, ob eine Third Generation Partnership Project (3GPP)-Übergabe für eine Benutzerausrüstung, UE, durchgeführt werden muss, wobei die 3GPP-Übergabe eine Übergabe von der ersten 3GPP-Zugangsvorrichtung zu einer zweiten 3GPP-Zugangsvorrichtung ist; und
eine Sendeeinheit (702), die konfiguriert ist, Verbindungsinformationen zwischen der UE und einer dritten Zugangsvorrichtung an die zweite 3GPP-Zugangsvorrichtung zu senden, wenn die Übergabebestimmungseinheit bestimmt, dass die 3GPP-Übergabe für die UE durchgeführt werden muss, wobei die Verbindungsinformationen konfiguriert sind, für ein Steuern einer Dienstübertragung der UE in der dritten Zugangsvorrichtung durch die zweite 3GPP-Zugangsvorrichtung verwendet wird, wobei die erste 3GPP-Zugangsvorrichtung und die dritte Zugangsvorrichtung Vorrichtungen sind, mit denen die UE derzeit verbunden ist, **dadurch gekennzeichnet, dass**: die dritte Zugangsvorrichtung eine Vorrichtung in einem drahtlosen lokalen Netzwerk, WLAN, ist und die Verbindungsinformationen sicherheitkonfigurations-bezogene Informationen der dritten Zugangsvorrichtung umfassen.

7. Vorrichtung nach Anspruch 6, wobei die Verbindungsinformationen ferner mindestens eines von Folgendem umfassen: Identifikation, ID, Informationen, Lastinformationen und Funkkanalinformationen der dritten Zugangsvorrichtung und Informationen über einen Dienst, der derzeit auf einer Verbindung mit der dritten Zugangsvorrichtung ausgeführt wird.

8. Vorrichtung nach Anspruch 6 oder 7, wobei die Übergabebestimmungseinheit (701) ferner zu Folgendem konfiguriert ist:
wenn die erste 3GPP-Zugangsvorrichtung bestimmt, dass die 3GPP-Übergabe für die UE durchgeführt werden muss, Trennen der Verbindung mit der UE und Anweisen der UE, sich mit der zweiten 3GPP-Zugangsvorrichtung zu verbinden, wobei die Verbindung zwischen der UE und der dritten Zugangsvorrichtung unverändert bleibt.

9. Zweite 3GPP-Zugangsvorrichtung, die Folgendes umfasst:
eine Empfangseinheit (801), die zu Folgendem konfiguriert ist: wenn eine erste Third Generation Partnership Project (3GPP)-Zugangsvorrichtung bestimmt, dass die Benutzerausrüstung, UE, von der ersten 3GPP-Zugangsvorrichtung an die zweite 3GPP-Zugangsvorrichtung übergeben werden muss, Empfangen von durch die erste 3GPP-Zugangsvorrichtung gesendeten Verbindungsinformationen zwischen der UE und einer dritten Zugangsvorrichtung, wobei die erste 3GPP-Zugangsvorrichtung und die dritte Zugangsvorrichtung Vorrichtungen sind, mit denen die UE derzeit verbunden ist; und
eine Dienststeuereinheit (802), die zu Folgendem konfiguriert ist: nachdem die UE an die zweite 3GPP-Zugangsvorrichtung übergeben und eine Verbindung zwischen der UE und der zweiten 3GPP-Zugangsvorrichtung hergestellt ist, Steuern der Dienstübertragung der UE in der dritten Zugangsvorrichtung gemäß den durch die Empfangseinheit empfangenen Verbindungsinformationen zwischen der UE und der dritten Zugangsvorrichtung, **dadurch gekennzeichnet, dass**: die dritte Zugangsvorrichtung eine Vorrichtung in einem drahtlosen lokalen Netzwerk, WLAN, ist und die Verbindungsinformationen sicherheitkonfigurations-bezogene Informationen der dritten Zugangsvorrichtung umfassen.

10. Vorrichtung nach Anspruch 9, wobei die Verbindungsinformationen ferner mindestens eines von Folgendem umfassen:
Identifikation, ID, Informationen, Lastinformationen und Funkkanalinformationen der dritten Zugangsvorrichtung und Informationen über einen Dienst, der derzeit auf einer Verbindung mit der dritten Zugangsvorrichtung ausgeführt wird.

11. Kommunikationssystem, das Folgendes umfasst:
eine erste 3GPP-Zugangsvorrichtung (1101) nach einem der Ansprüche 6 bis 8; und
eine zweite 3GPP-Zugangsvorrichtung (1102) nach Anspruch 9 oder 10.

## Revendications

1. Procédé de communication en mode double connexion, consistant à :
déterminer (101), par un premier dispositif d'accès du Third Generation Partnership Project (3GPP), si un transfert 3GPP doit être réalisé pour un équipement d'utilisateur (UE), le transfert 3GPP étant un transfert du premier dispositif d'accès 3GPP à un deuxième dispositif d'accès 3GPP ;
envoyer (102), par le premier dispositif d'accès 3GPP, une information de connexion entre l'UE et un troisième dispositif d'accès au deuxième dispositif d'accès 3GPP quand le premier dispositif d'accès 3GPP détermine que le transfert 3GPP doit être réalisé pour l'UE, l'information de connexion étant configurée pour être utilisée pour contrôler une transmission de service de l'UE dans le troisième dispositif d'accès par le deuxième dispositif d'accès 3GPP, le premier dispositif d'accès 3GPP et le troisième dispositif d'accès étant des dispositifs auxquels l'UE est actuellement connecté, le procédé étant **caractérisé en ce que** : le troisième dispositif d'accès est un dispositif dans un réseau local sans fil (WLAN), et l'information de connexion comprend une information relative à la configuration de sécurité du troisième dispositif d'accès.

2. Procédé selon la revendication 1, dans lequel l'information de connexion comprend en outre au moins une des informations suivantes :
une information d'identification (ID), une information de charge et une information de canal radio du troisième dispositif d'accès, et une information sur un service qui est actuellement transporté sur une connexion au troisième dispositif d'accès.

3. Procédé selon la revendication 1 ou 2, le procédé consistant en outre à :
quand le premier dispositif d'accès 3GPP détermine que le transfert 3GPP doit être réalisé pour l'UE, le premier dispositif d'accès 3GPP déconnecte la connexion à l'UE et donne l'instruction à l'UE de se connecter au deuxième dispositif d'accès 3GPP, la connexion entre l'UE et le troisième dispositif d'accès restant inchangée.

4. Procédé de communication en mode double connexion, consistant à :
recevoir (201), par un deuxième dispositif d'accès du Third Generation Partnership Project (3GPP), quand un premier dispositif d'accès 3GPP détermine qu'un équipement d'utilisateur (UE) doit être transféré du premier dispositif d'accès 3GPP au deuxième dispositif d'accès 3GPP, une information de connexion entre l'UE et un troisième dispositif d'accès envoyée par le premier dispositif d'accès 3GPP, le premier dispositif d'accès 3GPP et le troisième dispositif d'accès étant des dispositifs auxquels l'UE est actuellement connecté ; et
contrôler (202), par le deuxième dispositif d'accès 3GPP, la transmission de service de l'UE dans le troisième dispositif d'accès selon l'information de connexion entre l'UE et le troisième dispositif d'accès après le transfert de l'UE au deuxième dispositif d'accès 3GPP et l'établissement d'une connexion entre l'UE et le deuxième dispositif d'accès 3GPP, le procédé étant **caractérisé en ce que** : le troisième dispositif d'accès est un dispositif dans un réseau local sans fil (WLAN), et l'information de connexion comprend une information relative à la configuration de sécurité du troisième dispositif d'accès.

5. Procédé selon la revendication 4, dans lequel l'information de connexion comprend en outre au moins une des informations suivantes :
une information d'identification (ID), une information de charge et une information de canal radio du troisième dispositif d'accès, et une information sur un service qui est actuellement transporté sur une connexion au troisième dispositif d'accès.

6. Premier dispositif d'accès 3GPP, comprenant :
une unité de détermination de transfert (701), configurée pour déterminer si un transfert du Third Generation Partnership Project (3GPP) doit être réalisé pour un équipement d'utilisateur (UE), le transfert 3GPP étant un transfert du premier dispositif d'accès 3GPP à un deuxième dispositif d'accès 3GPP ; et
une unité d'envoi (702), configurée pour envoyer une information de connexion entre l'UE et un troisième dispositif d'accès au deuxième dispositif d'accès 3GPP quand l'unité de détermination de transfert détermine que le transfert 3GPP doit être réalisé pour l'UE, l'information de connexion étant configurée pour être utilisée pour contrôler une transmission de service de l'UE dans le troisième dispositif d'accès par le deuxième dispositif d'accès 3GPP, le premier dispositif d'accès 3GPP et le troisième dispositif d'accès étant des dispositifs auxquels l'UE est actuellement connecté, le premier dispositif d'accès 3GPP étant **caractérisé en ce que** : le troisième dispositif d'accès est un dispositif dans un réseau local sans fil (WLAN), et l'information de connexion comprend une information relative à la configuration de sécurité du troisième dispositif d'accès.

7. Dispositif selon la revendication 6, dans lequel l'information de connexion comprend en outre au moins une des informations suivantes : une information d'identification (ID), une information de charge et une information de canal radio du troisième dispositif d'accès, et une information sur un service qui est actuellement transporté sur une connexion au troisième dispositif d'accès.

8. Dispositif selon la revendication 6 ou 7, dans lequel l'unité de détermination de transfert (701) est en outre configurée pour :
quand le premier dispositif d'accès 3GPP détermine que le transfert 3GPP doit être réalisé pour l'UE, déconnecter la connexion à l'UE et donner l'instruction à l'UE de se connecter au deuxième dispositif d'accès 3GPP, la connexion entre l'UE et le troisième dispositif d'accès restant inchangée.

9. Deuxième dispositif d'accès 3GPP, comprenant :
une unité de réception (801), configurée pour : quand un premier dispositif d'accès du Third Generation Partnership Project (3GPP) détermine qu'un équipement d'utilisateur (UE) doit être transféré du premier dispositif d'accès 3GPP au deuxième dispositif d'accès 3GPP, recevoir une information de connexion entre l'UE et un troisième dispositif d'accès envoyée par le premier dispositif d'accès 3GPP, le premier dispositif d'accès 3GPP et le troisième dispositif d'accès étant des dispositifs auxquels l'UE est actuellement connecté ; et
une unité de contrôle de service (802), configurée pour : après le transfert de l'UE sur le deuxième dispositif d'accès 3GPP et l'établissement d'une connexion entre l'UE et le deuxième dispositif d'accès 3GPP, contrôler la transmission de service de l'UE dans le troisième dispositif d'accès selon l'information de connexion entre l'UE et le troisième dispositif d'accès reçue par l'unité de réception, le deuxième dispositif d'accès 3GPP étant **caractérisé en ce que** : le troisième dispositif d'accès est un dispositif dans un réseau local sans fil (WLAN), et l'information de connexion comprend une information relative à la configuration de sécurité du troisième dispositif d'accès.

10. Dispositif selon la revendication 9, dans lequel l'information de connexion comprend en outre au moins une des informations suivantes :
une information d'identification (ID), une information de charge et une information de canal radio du troisième dispositif d'accès, et une information sur un service qui est actuellement transporté sur une connexion au troisième dispositif d'accès.

11. Système de communication comprenant :
un premier dispositif d'accès 3GPP(1101) selon l'une quelconque des revendications 6 à 8 ; et un deuxième dispositif d'accès 3GPP(1102) selon la revendication 9 ou 10.
